Europäisches Patentamt

European Patent Office

Office européen des brevets

(11) Veröffentlichungsnummer: **0 609 401 B1**

(12) **EUROPÄISCHE PATENTSCHRIFT**

(45) Veröffentlichungstag der Patentschrift: **02.08.95**

(51) Int. Cl.6: **C01B 21/14**, B01D 53/34

(21) Anmeldenummer: **93908761.5**

(22) Anmeldetag: **15.10.92**

(86) Internationale Anmeldenummer:
**PCT/EP92/02381**

(87) Internationale Veröffentlichungsnummer:
**WO 93/08121 (29.04.93 93/11)**

(54) **VERFAHREN ZUR HERSTELLUNG VON HYDROXYLAMIN AUS NO x? ENTHALTENDEN ABGASEN.**

(30) Priorität: **21.10.91 LU 88021**

(43) Veröffentlichungstag der Anmeldung:
**10.08.94 Patentblatt 94/32**

(45) Bekanntmachung des Hinweises auf die
Patenterteilung:
**02.08.95 Patentblatt 95/31**

(84) Benannte Vertragsstaaten:
**AT BE CH DE DK ES FR GB GR IE IT LI LU NL SE**

(56) Entgegenhaltungen:
**EP-A- 0 041 819      EP-A- 0 216 388
WO-A-88/01253      US-A- 3 313 595
US-A- 4 115 523      US-A- 4 957 716**

(73) Patentinhaber: **EUROPÄISCHE ATOMGEMEIN-
SCHAFT (EURATOM)
Bâtiment Jean Monnet
Plateau du Kirchberg
L-2920 Luxembourg (LU)**

(72) Erfinder: **VAN VELZEN, Daniel
Via Buonarroti, 5
I-21020 Brebbia (IT)**
Erfinder: **LANGENKAMP, Heinrich
Via Matteotti, 112
I-21020 Cadrezzate (IT)**
Erfinder: **PAPAMELETIOU, Dimosthenis
Viale del Roccolo, 33
I-21020 Ispra (IT)**
Erfinder: **NYMOEN, Havard
Via Alberto, 37
I-21020 Ranco (IT)**

(74) Vertreter: **Weinmiller, Jürgen
Lennéstrasse 9
Postfach 24
D-82336 Feldafing (DE)**

**Beschreibung**

Die Erfindung betrifft ein Verfahren zur Herstellung von Hydroxylamin aus $NO_x$ und gegebenenfalls $O_2$ enthaltenden Abgasen durch gleichzeitiges Entsticken der Abgase und Synthese von Hydroxylamin durch katalytische Reduktion von NO mit Wasserstoff, sowie eine Vorrichtung zur Durchführung dieses Verfahrens.

Mit der vorliegenden Erfindung ist es möglich, die Entstickung von Abgasen, die aus Gründen des Umweltschutzes in vielen Ländern gesetzlich vorgeschrieben ist, mit der großtechnischen Produktion von Hydroxylamin, die ein wertvolles Zwischenprodukt für die Herstellung von Nylon-6 darstellt, zu kombinieren.

Die Entstickung von Abgasen, insbesondere solchen, wie sie in großtechnischen Verbrennungsanlagen, Kohle- und Erdöl-Kraftwerken sowie bei der Salpetersäureherstellung auftreten, ist aus Gründen des Umweltschutzes heute von beträchtlicher Bedeutung und unterliegt in zahlreichen Ländern strengen gesetzlichen Regelungen. So schreiben beispielsweise die EG-Richtlinien vor, daß der Gehalt an Stickoxiden in den Rauchgasen von großtechnischen Kraftwerken sowie in industriellen Abgasen 200 bis 400 mg/m3 nicht übersteigen dürfen. Diese niedrigen Grenzwerte können durch geeignete Maßnahmen während des Verbrennungsprozesses selbst, sogenannte primäre Maßnahmen, allein nicht eingehalten werden. Es ist daher die Anwendung spezieller Verfahren zur Entfernung der unerwünschten Stickoxide in sogenannten Entstickungsverfahren erforderlich, um diesen hohen Anforderungen zu genügen. Das heute am häufigsten angewendete Entstickungsverfahren ist die Entstickung durch selektive katalytische Reduktion (SCR), bei der die in den Angasen enthaltenen Stickoxide $NO_x$ (darunter sind hier verschiedene Stickstoffoxide, insbesondere NO, gegebenenfalls im Gemisch mit $NO_2$, zu verstehen) katalytisch reduziert werden zu $N_2$ und $H_2O$ durch Umsetzung mit Ammoniak ($NH_3$). Diese Reaktion läuft in der Regel bei einer Temperatur von 300 bis 400 °C ab. Es gibt zwar auch einige andere alternative industrielle Entstickungsverfahren, bei keinem dieser Verfahren werden jedoch die unerwünschten Stickoxide in ein technisch verwertbares Produkt umgewandelt.

Ein Versuch, ein verwertbares Produkt, nämlich NO-Reichgas, bei der Abgasreinigung zu gewinnen, ist in der DE-PS 3 406 085 beschrieben. Dort wird ein Verfahren zur Entstickung von $NO_x$ enthaltenden Abgasen durch Absorption der Stickoxide $NO_x$ in wäßrigen Lösungen von Eisen(II)-Salzen bei pH 0 bis 1 angegeben. Da jedoch bekannt ist, daß die Löslichkeit von $NO_x$ in einer solchen Lösung extrem gering ist, ist dieses Verfahren für die großtechnische Entstickung zu wenig wirksam.

Es sind auch bereits andere Verfahren vorgeschlagen worden, bei denen gleichzeitig $SO_2$ und $NO_x$ aus sie enthaltenden Abgasen entfernt werden oder andere Absorbentien, wie $Mg(OH)_2$, $Na_2SO_3$, Citrate und dgl., als Absorptionsmittel verwendet werden (vgl. H. Hasui und H. Omichi, "The Mitsui Wet Process for $SO_2$ und $NO_x$ Removal", Nenryo Kyokai-Shi 55 (1979) 4, 264-269, E. Sada, H. Kumazawa, I. Kudo und T. Kondo, "Ind. Eng. Process des. Dev.", 20 (1981) 3, 46-49, E. Sada, H. Kumazawa, Y. Sawada und T. Kondo, "Ind. Eng. Process Des. Dev.", 21 (1982) 4, 771-774, und W. Weisweiler, B. Retzlaff und L. Raible", Chem. Eng. Process", 18 (1984) 85-92).

Bei der Verwendung solcher Absorbentien wird zwar das chemische Gleichgewicht auf die gewünschte Seite verschoben, dabei tritt jedoch gleichzeitig eine unerwünschte Oxidation von Eisen(II) zu Eisen(III) auf aufgrund der in allen Abgasen anzutreffenden Sauerstoffgehalte, wodurch ihr Absorptionsvermögen stark vermindert wird. Außerdem bilden sich Sulfate, deren Entfernung Probleme bereitet. Üblicherweise setzt man Ätzkalk zu und erhält durch Ausfällung Kalium-Sulfat. Dabei geht jedoch der Fe(EDTA) Komplex verloren.

Andererseits ist Hydroxylamin ($NH_2OH$) anerkanntermaßen ein wertvolles Zwischenprodukt für die Synthese von Nylon-6. Hydroxylamin wird verwendet zur Herstellung von Cyclohexanonoxim aus Cyclohexanon, wobei das dabei entstehende Cyclohexanonoxim durch Beckmann-Umlagerung in Caprolactam überführt wird, das zu einem Polyamid, nämlich Nylon-6, einem außerordentlich wertvollen Kunststoff, polymerisiert werden kann.

Man ist daher seit langem bestrebt, das als Zwischenprodukt für die Herstellung von Nylon-6 erforderliche Hydroxylamin möglichst wirtschaftlich in großtechnischem Maßstab herzustellen. Eines der bekanntesten Syntheseverfahren ist das sogenannte Raschig-Verfahren, das auf der Reduktion von Ammoniumnitrat mit einer Bisulfit-Lösung und Schwefeldioxid basiert. Ein anderes bekanntes Syntheseverfahren ist das sogenannte BASF-Verfahren, bei dem Stickoxide NO mit gasförmigem Wasserstoff direkt zu Hydroxylamin reduziert werden (vgl. DE-C-1 177 118 und K. Jockers, "Nitrogen" Nr. 50, November/Dezember 1967, 27-30). Dabei reagiert ein Gemisch aus NO und H2 in einem wäßrigen sauren Medium in Gegenwart eines aufgeschlämmten Platin- oder anderen Edelmetall-Katalysators. Zur Durchführung dieses BASF-Verfahrens sind Chemikalien von Industrie-Qualität erforderlich und das als Ausgangsmaterial eingesetzte NO muß in situ durch Oxidation von Ammoniak hergestellt werden. Die Ausnutzung von ohnehin

anfallenden, $NO_x$ enthaltenden Abgasen ist nach den Angaben in diesen Druckschriften nicht möglich.

Es wurden auch bereits weitere Versuche unternommen, um die Synthese von Hydroxylamin aus Abgasen zu ermöglichen. So wird beispielsweise in der IT-A-1 152 229 vorgeschlagen, $NO_x$ und $SO_2$ enthaltende Prozeß-Abgase als Ausgangsmaterial einzusetzen. Dieses Verfahren ist jedoch auf die Verwendung von verhältnismäßig hohen Konzentrationen an $NO_x$ in der Größenordnung von 1 % beschränkt. Das heißt, zur Durchführung dieses Verfahrens können nur Abgase aus Niederdruck-Salpetersäure-Produktionen eingesetzt werden.

In der US-A-4 115 523 ist ein Verfahren zur Herstellung von Hydroxylamin aus NO und $H_2S$ aus Industrieabgasen bekannt. Aber auch bei diesem Verfahren sind hohe Konzentrationen an NOx von mehr als 10 Vol.-% erforderlich, da nur bei solchen Konzentrationen die Hydroxylaminsynthese befriedigend abläuft.

Aufgabe der Erfindung war es daher, einen Weg zur Synthese von Hydroxylamin aus ohnehin anfallenden Abgasen zu finden, welche die großtechnische und wirtschaftliche Herstellung von Hydroxylamin als wertvolles Zwischenprodukt für die Synthese von Nylon-6 ermöglicht.

Es wurde nun gefunden, daß diese Aufgabe erfindungsgemäß dadurch gelöst werden kann, daß die Entstickung von $NO_x$ sowie gegebenenfalls Sauerstoff enthaltenden Abgasen, die aus Gründen des Umweltschutzes ohnehin erforderlich ist, mit der katalytischen Reduktion des dabei gewonnenen NO mittels Wasserstoff im Rahmen eines großtechnisch durchführbaren Gesamtverfahrens kombiniert wird. Wesentlich ist dabei, daß die Entstickung der $NO_x$ sowie gegebenenfalls Sauerstoff enthaltenden Abgase durch Absorption von $NO_x$ in einer wäßrigen FeII-EDTA-Lösung bei verhältnismäßig niedriger Temperatur durchgeführt wird und das komplex gebundene NO aus der wäßrigen FeII(NO)-EDTA-Lösung bei erhöhter Temperatur durch Wasserdampf-Strippen unter Einleitung von elektrolytisch erzeugtem Wasserstoff desorbiert und konzentriert wird, so daß das dabei erhaltene Gasgemisch nach der Entfernung des Wasserdampfes durch Kondensation NO und $H_2$ in dem für die katalytische Synthese erforderlichen Verhältnis von etwa 35 Vol.-% NO zu etwa 65 Vol.-% $H_2$ enthält. Dieses Gasgemisch ist direkt geeignet als Beschickungsgas für die großtechnische Herstellung von Hydroxylamin durch katalytische Reduktion.

Gegenstand der Erfindung ist ein Verfahren zur Herstellung von Hydroxylamin aus $NO_x$ und gegebenenfalls $O_2$ enthaltenden Abgasen durch Kombinieren der Entstickung der $NO_x$ sowie gegebenenfalls $O_2$ enthaltenden Abgase mit der Synthese von Hydroxylamin durch katalytische Reduktion von NO mit Wasserstoff, das dadurch gekennzeichnet ist, daß es die folgenden Stufen umfaßt:

(a) ein $NO_x$ enthaltendes Abgas wird in den unteren Abschnitt eines Absorbers eingeleitet, in dem das in dem Abgas enthaltende $NO_x$ im Gegenstromkontakt mit einer in den Kopf des Absorbers eingeführten wäßrigen Lösung von FeII-EDTA bei verhältnismäßig niedriger Temperatur absorbiert wird unter Bildung eines in der wäßrigen Lösung gelösten FeII(NO)-EDTA-Komplexes, der zusammen mit der ihn enthaltenden wäßrigen Lösung als Bodenprodukt aus dem Absorber abgezogen und über einen Wärmeaustauscher zur Erhöhung seiner Temperatur als Kopfprodukt in einen Desorber eingeführt wird, während das von $NO_x$ befreiteAbgas überkopf aus dem Absorber abgezogen wird,

(b) aus der in den Kopf des Desorbers eingeführten wäßrigen Lösung des FeII(NO)-EDTA-Komplexes mit erhöhter Temperatur wird das NO im Gegenstromkontakt mit in den unteren Abschnitt des Desorbers aus einem Reboiler eingeführtem Wasserdampf und aus einem Elektrolysator eingeführtem Wasserstoff desorbiert und die dabei erhaltene, den gelösten FeII-EDTA-Komplex enthaltende wäßrige Lösung wird als Bodenprodukt aus dem Desorber abgezogen und über einen Elektrolysator zur Reduktion von eventuell darin enthaltenem FeIII-EDTA zu FeII-EDTA und über einen Wärmeaustauscher sowie einen Kühler zur stufenförmigen Herabsetzung seiner Temperatur in den oberen Abschnitt des Absorbers im Kreislauf zurückgeführt, und

(c) das aus dem Desorber überkopf abgezogene Gasgemisch aus NO, $H_2$ und Wasserdampf wird nach der Entfernung des Wasserdampfes in einem Kondensator und Rückführung des kondensierten Wasserdampfes in den Reboiler der direkten katalytischen Synthese von Hydroxylamin zugeführt.

Nach dem erfindungsgemäßen Verfahren ist es auf überraschend einfache und wirtschaftliche Weise möglich, $NO_x$ sowie gegebenenfalls Sauerstoff enthaltende Abgase wirksam zu entsticken durch Absorption und komplexe Bindung des NOx in einer wäßrigen FeII-EDTA-Lösung, ohne daß eine Reduktion zu N2 erfolgt wie bei den meisten bekannten Entstickungsverfahren. Andererseits kann nach dem erfindungsgemäßen Verfahren das nach der Desorption gewonnene $NO_x$ nach der Konzentration desselben im Gemisch mit in geeigneten Mengen zugeführtem Wasserstoff direkt katalytisch zu Hydroxylamin reduziert werden, ohne daß irgendwelche wertvollen Ausgangsmaterialien, wie Ammoniak und dgl., eingesetzt werden müssen. Dadurch läßt sich das erfindungsgemäße Gesamtverfahren außerordentlich wirtschaftlich gestalten. Das erfindungsgemäße Verfahren ist auch dann mit Erfolg durchführbar, wenn in den als Ausgangsmaterial eingesetzten Abgasen weitere oxidierende Bestandteile wie Sauerstoff und/oder $NO_2$ enthalten sind, die

eine mindestens partielle Oxidation der wäßrigen FeII-EDTA-Lösung zu einer wäßrigen FeIII-EDTA-Lösung bewirken.

Dem wird erfindungsgemäß dadurch Rechnung getragen, daß die partiell oxidierte wäßrige Absorptionslösung auf elektrolytischem Wege regeneriert wird unter gleichzeitiger Bildung von Wasserstoff, die so gesteuert wird, daß der Wasserstoff in dem für die großtechnische Produktion von Hydroxylamin geeigneten Verhältnis zu dem desorbierten NO vorliegt. Nach dem erfindungsgemäßen Verfahren lassen sich so auch sehr niedrige Konzentrationen an $NO_x$ von sogar unter 500 mg/m3 aufkonzentrieren zur wirksamen Synthese von Hydroxylamin.

Wie oben angegeben, bietet das erfindungsgemäße Verfahren zahlreiche Vorteile gegenüber den bisher bekannten vergleichbaren Verfahren des Standes der Technik. Da einige Typen von Abgasen, die entstickt werden müssen, neben 3 bis 5 Vol.-% Sauerstoff beträchtliche Mengen an Stickstoffdioxid ($NO_2$) enthalten, ist es sehr wesentlich, daß das erfindungsgemäße Verfahren auch auf Abgase anwendbar ist, die $NO_2$ enthalten. Insbesondere bei der Herstellung von Salpetersäure entsteht dieser umweltschädliche Bestandteil in beträchtlicher Menge und die Abgase enthalten beträchtliche Konzentrationen an $NO_2$. Die typischen $NO_x$-Konzentrationen in dem den letzten Absorber einer Salpetersäure-Herstellungsanlage verlassenden Abgas können bis zu 4000 ppm betragen, wobei der $NO_2$-Gehalt 50 % der Gesamtkonzentration an NOx ausmachen kann.

Diese Mengen an $NO_2$ führen häufig zu Problemen, die sich darin äußern, daß eine braune $NO_2$-Fahne über dem Kamin einer Salpetersäure-Herstellungsanlage zu erkennen ist. Der Gesamtgehalt an $NO_x$ in dem Abgas muß vor dem Ablassen in die Atmosphäre auf 200 ppm herabgesetzt werden. Es ist allgemein anerkannt, daß der $NO_2$-Gehalt auf weniger als 75 bis 100 ppm herabgesetzt werden muß, um eine farblose Rauchfahne zu erzeugen.

Bei Anwendung des erfindungsgemäßen Verfahrens auf solche Abgase wird das in dem Abgas enthaltene Stickstoffdioxid ($NO_2$) während des Absorptions-Komplexbildungs-Prozesses nach der folgenden Reaktionsgleichung in Stickoxid NO umgewandelt:

$$NO_2 + 3\ FeII\text{-}EDTA + 2\ H^+ \rightarrow FeII(NO)\text{-}EDTA + 2\ FeIII\text{-}EDTA + H_2O$$

Das Stickstoffdioxid ($NO_2$) wird in der Waschflüssigkeit gelöst und anschließend durch FeII zu Stickoxid (NO) reduziert, das den entsprechenden Nitrosylkomplex FeII(NO)-EDTA bildet. Das NO kann in einer hohen Konzentration aus diesem Komplex freigesetzt werden. Das dabei entstandene FeIII-EDTA wird in einem Elektrolysator zum aktiven FeII-EDTA reduziert. Daraus folgt, daß der Anteil an $NO_2$, der in dem Abgas ursprünglich vorhanden ist, in NO umgewandelt wird, das in hochkonzentrierter Form außerordentlich wertvoll ist für die Herstellung des NO/$H_2$-Gemisches für die Hydroxylamin-Synthese. Daß diese Reaktion bei der Durchführung des erfindungsgemäßen Verfahrens tatsächlich abläuft, ergibt sich aus den in den weiter unten folgenden Beispielen 2 und 3 beschriebenen Laborversuchen.

Da bei der Durchführung des erfindungsgemäßen Verfahrens die Absorption von $NO_x$ in dem Absorber um so wirksamer ist, je niedriger die Temperatur der Absorptionslösung ist, wird die Absorptionslösung vor der Einführung in den Absorber auf eine Temperatur von 20 bis 40°C, vorzugsweise 30°C, abgekühlt. Dadurch wird das Absorptionsvermögen der Absorptionsflüssigkeit gegenüber dem Arbeiten bei einer Betriebstemperatur von 50°C mindestens um den Faktor 3,3 erhöht (bei 50°C beträgt Kp = 287 bar$^{-1}$ und bei 35°C beträgt Kp = 929 bar$^{-1}$). Dabei sinkt der NO-Gehalt des eingesetzten Abgases während des Durchgangs durch den Absorber von anfänglich beispielsweise 500 ppm auf beispielsweise 100 ppm, während die Konzentration des FeII(NO)-EDTA-Komplexes in der angereicherten Absorptionslösung beispielsweise 12,5 mMol/l beträgt, d.h. der Umwandlungsgrad beträgt 0,25.

Andererseits wird die Desorption von NO aus dem FeII(NO)-EDTA-Komplex in dem Desorber bestimmt durch die Werte der Gleichgewichtskonstanten (Kp) bei höheren Temperaturen, die durch die folgende Gleichung definiert ist:

$$Kp = \frac{y}{p \cdot (1-y)} = 9.58 \cdot 10^{-9} \exp(7792/T)$$

worin y den Umwandlungsgrad und p den Partialdruck von NO (in bar) bedeuten.

Bei 100°C beträgt Kp 11,3, d.h. der maximal erzielbare Partialdruck von NO während der Desorption ist auf einen Wert von weniger als 0,05 bar beschränkt. Durch Anwendung eines kondensierbaren Inertgases,

4

wie z.B. Wasserdampf, können jedoch nach der Entfernung des Inertgases durch Kondensation hohe NO-Konzentrationen erzielt werden. Durch diese Methode des Wasserdampf-Stripping lassen sich erfindungsgemäß hohe NO-Konzentrationen nach der Desorption erzielen, die für die praktische Synthese von Hydroxylamin außerordentlich vorteilhaft sind.

Bevorzugte Ausführungsformen des erfindungsgemäßen Verfahrens sind in den Unteransprüchen 2 bis 8 beschrieben.

Gegenstand der Erfindung ist ferner eine Vorrichtung zur Durchführung des vorstehend beschriebenen Verfahrens, die dadurch gekennzeichnet ist, daß sie umfaßt

- einen Absorber, in dessen unteren Abschnitt das $NO_x$ sowie gegebenenfalls $O_2$ enthaltende Abgas eingeleitet wird und aus dem überkopf das von $NO_x$ befreite Abgas abgezogen wird;

- einen Wärmeaustauscher, in dessen unteren Abschnitt die den FeII(NO)-EDTA-Komplex enthaltende wäßrige Lösung eingeführt wird zur Erhöhung ihrer Temperatur bis auf einen Wert in der Nähe ihres Siedepunktes, die dann überkopf abgezogen und in einen Desorber eingeführt wird, während die aus einem Elektrolysator abgezogene und in den Kopf des Wärmeaustauschers eingeführte erhitzte regenerierte wäßrige FeII-EDTA-Lösung nach dem Abkühlen durch Wärmeaustausch als Bodenprodukt abgezogen und über einen Kühler in den Kopf des Absorbers zurückgeführt wird;

- einen Desorber, in dessen oberen Abschnitt die erhitzte wäßrige FeII(NO)-EDTA-Komplex-Lösung eingeleitet und im Gegenstromkontakt mit in den unteren Abschnitt des Desorbers eingeleitetem Wasserstoff und eingeleitetem Wasserdampf durch Desorption bei erhöhter Temperatur von dem komplex gebundenen NO befreit wird, wonach das in dem Absorber entstandene Gasgemisch aus NO, $H_2$ und Wasserdampf überkopf abgezogen und - nach Entfernung des Wasserdampfes in einem Kondensator und Rückführung des kondensierten Wasserdampfes in einen Reboiler, in dem der dem Desorber zugeführte Wasserdampf erzeugt wird - direkt der katalytischen Hydroxylaminsythese zugeführt wird, während die als Bodenprodukt aus dem Desorber abgezogene wäßrige Lösung von FeII-EDTA einem Elektrolysator zugeführt wird, und

- einen aus Anoden- und Kathodenabteil bestehenden Elektrolysator, in dessen Kathodenabteil die aus dem Desorber abgezogene wäßrige FeII-EDTA-Lösung eingeführt wird zur Reduktion von eventuell darin enthaltenem FeIII-EDTA zu FeII-EDTA unter gleichzeitiger Bildung von Wasserstoff, der in den unteren Abschnitt des Desorbers eingeführt wird, während die regenerierte wäßrige FeII-EDTA-Lösung von erhöhter Temperatur zur stufenförmigen Abkühlung aus dem Kathodenabteil abgezogen und in den Wärmeaustauscher und von dort über den Kühler in den Absorber zurückgeführt wird, während der im Anodenabteil gebildete Sauerstoff abgezogen wird.

Bevorzugte Ausgestaltungen der erfindungsgemäßen Vorrichtung ergeben sich aus den Unteransprüchen 10 bis 12.

Das erfindungsgemäße Verfahren und die erfindungsgemäße Vorrichtung werden nachstehend unter Bezugnahme auf die beiliegenden Zeichnungen näher erläutert. Es zeigen:

Fig. 1      den schematischen Ablauf des erfindungsgemäßen Verfahrens und den schematischen Aufbau der erfindungsgemäßen Vorrichtung zur Herstellung von Hydroxylamin aus $NO_x$ und gegebenenfalls Sauerstoff enthaltenden Abgasen in Form eines schematischen Blockdiagramms; und

Fig. 2      der Verlauf der NO- und $NO_2$-Konzentrationen während der Durchführung des erfindungsgemäßen Verfahrens gemäß dem weiter unten beschriebenen Beispiel 2 in schematischer Darstellung.

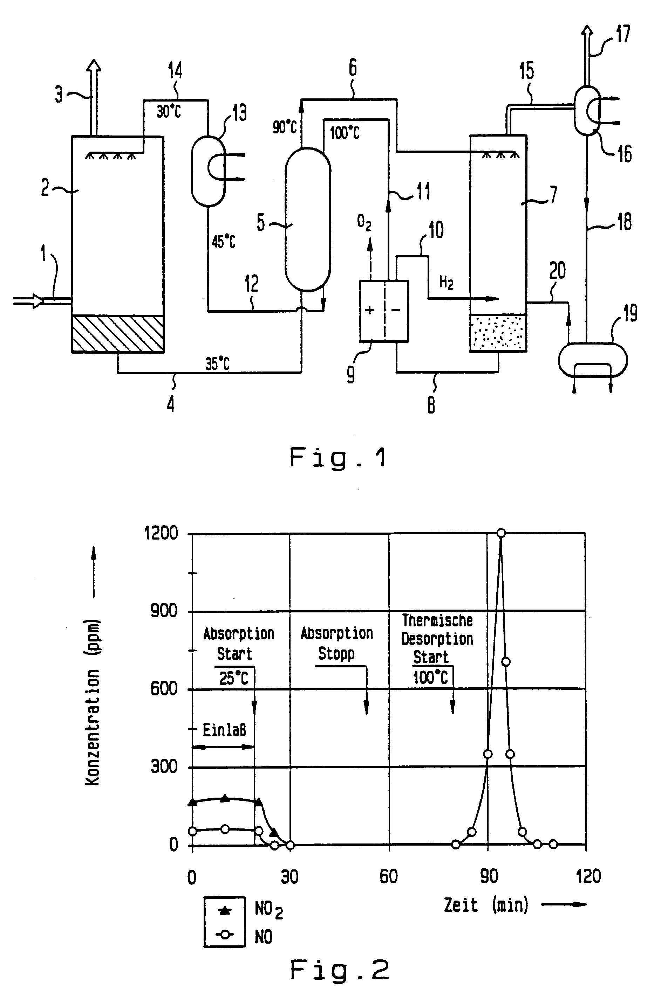

Die Erfindung wird nachstehend anhand einer beispielhaften Ausführungsform, wie sie in Fig. 1 schematisch dargestellt ist, näher erläutert. Diese Ausführungsform stellt ein typisches Beispiel für den Betrieb einer Pilot-Anlage für eine mögliche industrielle Anwendung dar.

Die Erfindung wird in den folgenden Beispielen unter Bezugnahme auf die beiliegenden Zeichnungen anhand bevorzugter Ausführungsformen näher erläutert, ohne jedoch darauf beschränkt zu sein.

Beispiel 1

Bei diesem Beispiel werden 10 000 $Nm_3/h$ eines Abgases mit einem $NO_x$-Gehalt von 500 $mg/m^3$ behandelt. Das eingesetzte Abgas ist bereits desulfurisiert nach einem der üblichen Naß-FGD-Verfahren. Die Temperatur des eingesetzten Abgases beträgt 50°C und es enthält weniger als 100 $mg/m^3$ $SO_2$.

Der eingesetzte Absorber (2) besteht aus einer gefüllten Säule mit einem Durchmesser von 1,4 m. Der Abgasstrom (1) wird am Boden in den Absorber (2) eingeführt und im Gegenstrom mit der am Kopf des Absorbers (2) eingeführten reaktionsfähigen Absorptionslösung kontaktiert. Letztere besteht aus einer wäßrigen Lösung, die 50 mMol/l FeII-EDTA-Komplex enthielt (EDTA = Ethylendiamintetraessigsäure). Der pH-Wert der Lösung wird zwischen 2,8 und 3,0 konstant gehalten. Die Lösung wird mit einer Strömungsrate von 14 m³/h am Kopf des Absorbers (2) durch ein geeignetes Stromverteilersystem eingeführt.

Es ist vorteilhaft, die Absorptionsflüssigkeit vor dem Eintreten in den Absorber (2) auf 30°C abzukühlen. Dadurch wird bewirkt, daß die Betriebstemperatur von 50°C auf 35°C sinkt, wodurch die Absorptionskapazität der Flüssigkeit um den Faktor 3,3 steigt (bei 50°C gilt Kp = 287 bar⁻¹ und bei 35°C gilt Kp = 929 bar⁻¹).

Der $NO_x$-Gehalt des Abgases nimmt während des Durchgangs durch den Absorber (2) von 500 auf 100 ppm ab, d.h. das aus dem Absorber (2) abgezogene gereinigte Abgas (3) enthält nur noch 100 ppm $NO_x$. Die in den Kopf des Absorbers (2) eingeführte Absorptionsflüssigkeit ist frei von NO, während die Konzentration der am Boden des Absorbers (2) anfallenden angereicherten Lösung von FeII(NO)-EDTA-Komplex 12,5 mMol/l beträgt, d.h. der Grad der Umwandlung beträgt 0,25.

Nach dem Abziehen der angereicherten Extraktionslösung aus dem Absorber (2) wird sie durch die Leitung (4) in den Boden des Wärmeaustauschers (5) eingeführt. Dabei handelt es sich vorzugsweise um einen Flüssig-Flüssig-Wärmeaustauscher, der dazu dient, die Temperatur der angereicherten Absorptionslösung von 35°C auf eine Temperatur zu bringen, die so nahe wie möglich beim Siedepunkt der Lösung liegt. Gleichzeitig wird in diesem Wärmeaustauscher (5) die heiße, von NO befreite Absorptionslösung vor ihrer Rückführung in den Absorber (2) auf die niedrigere Temperatur des Absorbers (2) heruntergekühlt. Diese Operation kann vorzugsweise in einem klassischen Mantel und Rohr-Wärmeaustauscher durchgeführt werden, in dem die kühle Flüssigkeit durch den Mantel fließt, während die heiße Flüssigkeit durch die Rohre fließt. Die Temperaturdifferenz ($\Delta$T) zwischen der heißen und der kühlen Seite des Wärmeaustauschers (5) beträgt zweckmäßig 5 bis 15°C, vorzugsweise 10°C.

Der Wärmeübergang ist im vorliegenden Falle beträchtlich, denn 14 t/h einer wäßrigen Lösung müssen von 35 auf 90°C erhitzt werden. Das heißt, die Wärmeübergangsrate beträgt 1060 kW. Um diese Wärmeübergangsrate zu erreichen, ist eine Wärmeaustauscher-Oberfläche von etwa 120 m² erforderlich.

Die kühle, an NO verarmte Lösung verläßt den Wärmeaustauscher bei einer Temperatur von 45°C. Dieser Flüssigkeitsstrom muß bis auf 30°C weiter heruntergekühlt werden. Dieser Kühlvorgang wird in einem Kühler (13) durchgeführt, bei dem es sich vorzugsweise um einen zweiten Wärmeaustauscher handelt. Die kühlere Seite dieser Einheit wird mit Kühlwasser von nahezu Raumtemperatur beschickt. In diesem Falle beträgt die Wärmeübergangsrate 240 kW, die Temperaturdifferenz $\Delta$T ist geringer als die in dem Haupt-Wärmeaustauscher (5) angewendete Temperaturdifferenz, und sie kann in der Größenordnung von 3 bis 8°C, vorzugsweise bei 5°C, liegen. Die in dem Kühler (13) erforderliche Wärmeaustausch-Oberfläche beträgt daher nur etwa 50 m².

Die in dem Wärmeaustauscher (5) bis auf 90°C erhitzte, an NO angereicherte Absorptionslösung wird durch die Leitung (6) in den Kopf eines Desorbers (7) eingeführt. In dem Desorber (7) wird der FeII-EDTA-Komplex regeneriert und das komplex gebundene NO wird in konzentrierter Form freigesetzt. Auch der Desorber (7) besteht vorzugsweise aus einer gefüllten Säule. Der Durchmesser der Säule kann viel geringer sein als derjenige des Absorbers (2) und er kann beispielsweise 0,3 m betragen.

Die an NO angereicherte Absorptionslösung, die beim Durchgang durch den Flüssig/Flüssig-Wärmeaustauscher (5) auf beispielsweise 90°C erhitzt worden ist, wird in dem Desorber (7) im Gegenstrom zu dem durch die Leitung (10) in den unteren Abschnitt des Desorbers (7) mit einer Strömungsrate von z.B. 7,2 Nm³/h eingeführten Wasserstoff geführt, der in einem Elektrolysator (9) erzeugt wird. Außerdem wird Wasserdampf durch die Leitung (20) in den unteren Abschnitt des Desorbers (7) eingeführt. Der Wasserdampf wird in einem Reboiler (19) erzeugt. Die volumetrische Strömungsrate des Wasserdampfes muß sorgfältig gesteuert bzw. kontrolliert werden und sie darf im vorliegenden Fall nicht weniger als 195 Nm³/h, entsprechend 160 kg/h, betragen.

Auf diese Weise entsteht am Kopf der Säule (7) ein Gasgemisch, das eine Temperatur hat, die nahe bei 100°C liegt. Der NO-Gehalt dieses Gasgemisches beträgt 1,9 Vol.-%, der H2-Gehalt beträgt 3,5 Vol.-% und der Rest ist Wasserdampf. Dieses Gasgemisch wird durch die Leitung (15) aus dem Kopf des Desorbers (7) abgezogen und durch einen Kondensator (16) geführt, in dem der gesamte Wasserdampf kondensiert, der durch die Leitung (18) in den Reboiler (19) zurückgeführt wird. Das durch die Leitung (17) mit einer Strömungsrate von 11,1 Nm³/h aus dem Kondensator (16) abgezogene Gasgemisch besteht zu 35 Vol.-% aus NO und zu 65 Vol.-% aus $H_2$. Dieses Gasgemisch kann direkt für die großtechnische Herstellung von Hydroxylamin durch katalytische Reduktion von Stickoxid mit Wasserstoff nach dem BASF-Verfahren verwendet werden.

Da die meisten industriellen Abgase 3 bis 5 Vol.-% Sauerstoff enthalten, tritt dann, wenn der FeII-EDTA-Komplex im Absorber (2) mit diesem Sauerstoff enthaltenden Abgas in Kontakt kommt, eine unerwünschte Oxidation von FeII-EDTA zu FeIII-EDTA auf. Daher ist es unerläßlich, diesen oxidierten Komplex vor der Rückführung in den Absorber (2) zum FeII-EDTA-Komplex zu reduzieren. Diese Reduktion erfolgt vorzugsweise durch elektrolytische kathodische Reduktion.

EP 0 609 401 B1

Die am Boden des Desorbers (7) abgezogene, von NO befreite wäßrige Absorptionslösung wird daher zweckmäßig durch die Leitung (8) in das Kathodenabteil einer Elektrolysezelle (Elektrolysator (9)) eingeführt. Dabei ist es vorteilhaft, die Elektrolyse bei einer höheren Temperatur durchzuführen, da dadurch die Spannung der Elektrolysezelle niedriger gehalten werden kann. Aus diesem Grunde wird die Elektrolysezelle, d.h. der Elektrolysator (9), zwischen dem Boden des Desorbers (7) und der heißen Seite des Wärmeaustauschers (5) angeordnet.

Die Rate der Oxidation des FeII-EDTA-Komplexes im Absorber (2) kann wie folgt abgeschätzt werden: Laborversuche zeigen, daß die Oxidationsrate etwa 10 %/h beträgt. Dies entspricht im vorliegenden Beispiel einer Produktionsrate an FeIII-EDTA von 70 Mol/h. Für die elektrolytische Reduktion dieses Flüssigkeitsstroms in dem Elektrolysator (9) ist daher ein Strom von etwa 2 kA erforderlich.

Der für die Herstellung des Hydroxylamin-Synthesegasgemisches in dem Desorber (7) erforderliche Wasserstoff wird ebenfalls in dem Elektrolysator (9) gebildet. Da die NO-Entfernungsrate aus der wäßrigen Absorptionslösung in dem Desorber (7) im vorliegenden Beispiel 175 Mol/h (3,9 Nm$^3$/h) betrug, bedeutet dies, daß für die Herstellung eines 65 Vol.-% H$_2$/35 Vol.-% NO-Gemisches 323 Mol/h (7,2 Nm$^3$/h) Wasserstoff erzeugt werden müssen. Der für diese Wasserstoffbildung erforderliche Strom beträgt (bei einem Stromwirkungsgrad von 90 %) 20 kA.

Die Gesamtkapazität der Elektrolysezelle (9) beträgt somit 22 kA. Wenn man annimmt, daß die Stromdichte 2 kA/m$^2$ beträgt, folgt daraus, daß die Elektroden-Oberfläche in dem Elektrolysator (9) 11 m$^2$ betragen muß. Es muß eine in Anodenabteil und Kathodenabteil unterteilte Elektrolysezelle verwendet werden, die eine Membran oder ein Diaphragma aus einem geeigneten Material als Trennelement enthält.

In dem Anodenabteil des Elektrolysators (9) wird aus den OH-Ionen Sauerstoff in einer Gesamtmenge von 4,1 Nm$^3$/h gebildet. Dieser Sauerstoff wird aus dem Anodenabteil des Elektrolysators (9) abgezogen.

Der Energieverbrauch der Elektrolysezelle beträgt etwa 66 kW, resultierend aus einem Strom von 22 kA und einer Zellspannung von 3 V.

Beispiel 2

Eine 300 ml-Waschflasche enthält 100 ml einer Flüssigkeit, die FeII-EDTA in einer Konzentration von 60 mMol/l enthält. Der anfängliche pH-Wert der Lösung beträgt 2,54, die Temperatur beträgt 21°C. Ein Gasstrom von 47 l/h wird durch die Lösung geleitet. Das Gas besteht aus Stickstoff mit 170 ppm NO$_2$, 60 ppm NO und 3 Vol.-% Sauerstoff. Der Gesamtgehalt an NO$_x$ des die Waschflasche verlassenden Gases wird kontinuierlich überwacht. Nach einer sehr kurzen Zeitspanne fällt die NO$_x$-Konzentration am Auslaß auf einen Wert nahe bei 0. Der Strom wird 30 min lang aufrechterhalten, der NO$_x$-Gehalt des austretenden Gases bleibt bei einem Wert von nahe 0. Dann wird der Gasstrom gestoppt.

Die Waschflasche wird dann in ein Ölbad von 100°C gesetzt und es werden 47 l/h Stickstoff (der frei von Stickoxiden ist) durch die in der Waschflasche enthaltene Flüssigkeit hindurchgeleitet. Das austretende Gas zeigt einen sehr hohen NO-Peak mit einer maximalen Konzentration von 1200 ppm an. Es konnte kein NO$_2$ nachgewiesen werden. Die Integration des dabei erhaltenen Peaks zeigt, daß die Gesamtmenge an freigesetztem NO der Gesamtmenge an absorbiertem NO + NO$_2$ entsprach. Der pH-Wert der Lösung stieg während des Versuchs von 2,54 auf 2,76. Der Verlauf der NO- und NO$_2$-Konzentrationen während dieses Versuchs in dem Austrittsgas ist in der Fig. 2 der beiliegenden Zeichnungen schematisch dargestellt.

Beispiel 3

In eine Labor-Siebplatten-Säule mit einer Höhe von 50 cm und einem Innendurchmesser von 3 cm wurde eine 60 mMol/l FeII-EDTA enthaltende Flüssigkeit in den Kopf eingeleitet. Im Gegenstrom zu der Flüssigkeit wurde ein von unten nach oben strömendes Gas mit einer konstanten Rate von 60 l/h eingeführt. Das Gas bestand aus Stickstoff mit 3 Vol.-% Sauerstoff und 1000 ppm Stickstoffoxiden. Der NO$_2$-Gehalt betrug 300 ppm, der NO-Gehalt betrug 700 ppm.

Die Strömungsrate der Flüssigkeit wurde bei 1 l/h gehalten. Das aus der Säule austretende Gas wurde auf seinen NO$_x$-Gehalt kontinuierlich überwacht. Das austretende Gas war frei von NO$_x$. Alle Stickstoffoxide waren absorbiert worden. Die Bestimmung des Gehaltes der Flüssigkeit an reduzierbarem Stickstoff ergab eine Konzentration von 2,3 mMol/l.

Die Verringerung des Flüssigkeitsstromes auf 500 ml/l führte zu keiner Änderung des NO$_x$-Gehaltes in dem austretenden Gas, der weiterhin bei einem Wert nahe bei 0 blieb. Der Gehalt der Flüssigkeit an reduzierbarem Stickstoff stieg auf 4,0 mMol/l.

**Patentansprüche**

1. Verfahren zur Herstellung von Hydroxylamin aus $NO_x$ und gegebenenfalls $O_2$ enthaltenden Abgasen durch gleichzeitiges Entsticken der Abgase und Synthese von Hydroxylamin durch katalytische Reduktion von NO mit Wasserstoff, dadurch **gekennzeichnet**, daß es die folgenden Stufen umfaßt:

(a) ein $NO_x$ enthaltendes Abgas wird in den unteren Abschnitt eines Absorbers eingeleitet, in dem das in dem Abgas enthaltende $NO_x$ im Gegenstromkontakt mit einer in den Kopf des Absorbers eingeführten wäßrigen Lösung von FeII-EDTA bei verhältnismäßig niedriger Temperatur absorbiert wird unter Bildung eines in der wäßrigen Lösung gelösten FeII(NO)-EDTA-Komplexes, der zusammen mit der ihn enthaltenden wäßrigen Lösung als Bodenprodukt aus dem Absorber abgezogen und über einen Wärmeaustauscher zur Erhöhung seiner Temperatur als Kopfprodukt in einen Desorber eingeführt wird, während das von $NO_x$ befreite Abgas überkopf aus dem Absorber abgezogen wird,

(b) aus der in den Kopf des Desorbers eingeführten wäßrigen Lösung des FeII(NO)-EDTA-Komplexes mit erhöhter Temperatur wird das NO im Gegenstromkontakt mit in den unteren Abschnitt des Desorbers aus einem Reboiler eingeführtem Wasserdampf und aus einem Elektrolysator eingeführtem Wasserstoff desorbiert und die dabei erhaltene, den gelösten FeII-EDTA-Komplex enthaltende wäßrige Lösung wird als Bodenprodukt aus dem Desorber abgezogen und über einen Elektrolysator zur Reduktion von eventuell darin enthaltenem FeIII-EDTA zu FeII-EDTA und über einen Wärmeaustauscher sowie einen Kühler zur stufenförmigen Herabsetzung ihrer Temperatur in den oberen Abschnitt des Absorbers im Kreislauf zurückgeführt, und

(c) das aus dem Desorber überkopf abgezogene Gasgemisch aus NO, $H_2$ und Wasserdampf wird nach der Entfernung des Wasserdampfes in einem Kondensator und Rückführung des kondensierten Wasserdampfes in den Reboiler der direkten katalytischen Synthese von Hydroxylamin zugeführt.

2. Verfahren nach Anspruch 1, dadurch gekennzeichnet, daß die Absorption des $NO_x$ aus dem Abgas in dem Absorber bei einer Temperatur von 25 bis 35°C, vorzugsweise bei 30°C, durchgeführt wird, während die Desorption des NO aus der wäßrigen FEII(NO)-EDTA-Lösung im Desorber bei einer Temperatur von 80 bis 100°C, vorzugsweise bei 90°C, durchgeführt wird.

3. Verfahren nach Anspruch 1 oder 2, dadurch gekennzeichnet, daß als Abgas in den Absorber ein desulfuriertes Abgas mit einem $NO_x$-Gehalt von 200 bis 4 000, vorzugsweise von 500 ppm, und einem $SO_2$-Gehalt von weniger als 100 mg $SO_2/m^3$ und einer Temperatur von 50°C eingeführt wird.

4. Verfahren nach den Ansprüchen 1 bis 3, dadurch gekennzeichnet, daß ein Abgas verwendet wird, das NO im Gemisch mit $NO_2$ sowie gegebenenfalls 3 bis 5 Vol.-% $O_2$ enthält.

5. Verfahren nach den Ansprüchen 1 bis 4, dadurch gekennzeichnet, daß in den Desorber die wäßrige FeII(NO)-EDTA-Lösung und gasförmiger Wasserstoff sowie Wasserdampf in solchen Mengen eingeführt werden, daß das den Desorber verlassende Gasgemisch nach der Kondensation und Entfernung des Wasserdampfes etwa 35 Vol.-% NO und 65 Vol.-% $H_2$ enthält.

6. Verfahren nach einem der Ansprüche 1 bis 5, dadurch gekennzeichnet, daß als Wärmeaustauscher ein Mantel und Rohr-Wärmeaustauscher verwendet wird, in dem die Temperaturdifferenz zwischen der heißen und der kühlen Seite 5 bis 15°C, vorzugsweise 10°C, beträgt.

7. Verfahren nach einem der Ansprüche 1 bis 6, dadurch gekennzeichnet, daß als Kühler ein Wärmeaustauscher verwendet wird, bei dem die Temperaturdifferenz zwischen wärmerer und kühlerer Seite 4 bis 8°C, vorzugsweise 5°C, beträgt.

8. Verfahren nach einem der Ansprüche 1 bis 7, dadurch gekennzeichnet, daß der pH-Wert der wäßrigen Lösung in dem Absorber zwischen 2,8 und 3,0 konstant gehalten wird.

9. Vorrichtung zur Durchführung des Verfahrens nach einem der Ansprüche 1 bis 8, dadurch gekennzeichnet, daß sie umfaßt
   - einen Absorber (2), in dessen unteren Abschnitt das $NO_x$ sowie gegebenenfalls O2 enthaltende Abgas (1) eingeleitet wird und aus dem überkopf das von $NO_x$ befreite Abgas (3) abgezogen wird;
   - einen Wärmeaustauscher (5), in dessen unteren Abschnitt die den FeII(NO)-EDTA-Komplex enthaltende wäßrige Lösung eingeführt wird zur Erhöhung ihrer Temperatur bis auf einen Wert in der Nähe ihres Siedepunktes, die dann überkopf durch eine Leitung (6) abgezogen und in einen Desorber (7) eingeleitet wird, während die aus einem Elektrolysator (9) über eine Leitung (11) abgezogene und in den Kopf des Wärmeaustauschers (5) eingeführte erhitzte regenerierte wäßrige FeII-EDTA-Lösung nach dem Abkühlen durch Wärmeaustausch als Bodenprodukt abgezogen und durch eine Leitung (12) über einen Kühler (13) durch eine Leitung (14) in den Kopf des Absorbers (2) zurückgeführt wird;

- einen Desorber (7), in dessen oberen Abschnitt die erhitzte wäßrige FeII(NO)-EDTA-Komplex-Lösung durch die Leitung (6) eingeleitet und im Gegenstromkontakt mit in den unteren Abschnitt des Desorbers (7) durch eine Leitung (10) eingeleitetem Wasserstoff und durch eine Leitung (20) eingeleitetem Wasserdampf durch Desorption bei erhöhter Temperatur von dem komplex gebundenen NO befreit wird, wonach das in dem Absorber entstandene Gasgemisch aus NO, H2 und Wasserdampf durch eine Leitung (15) überkopf abgezogen und - nach Entfernung des Wasserdampfes in dem Kondensator (16) und Rückführung des kondensierten Wasserdampfes durch eine Leitung (18) in einen Reboiler (19), in dem der durch die Leitung (20) dem Desorber zugeführte Wasserdampf erzeugt wird - durch eine Leitung (17) direkt der katalytischen Hydroxylaminsythese zugeführt wird, während die als Bodenprodukt aus dem Desorber (7) abgezogene wäßrige Lösung von FeII-EDTA durch eine Leitung (8) dem Elektrolysator (9) zugeführt wird, und

- einen aus Anoden- und Kathodenabteil bestehenden Elektrolysator (9), in dessen Kathodenabteil die aus dem Desorber (7) durch die Leitung (8) abgezogene wäßrige FeII-EDTA-Lösung eingeführt wird zur Reduktion von eventuell darin enthaltenem FeIII-EDTA zu FeII-EDTA unter gleichzeitiger Bildung von Wasserstoff, der über die Leitung (10) in den unteren Abschnitt des Desorbers (7) eingeführt wird, während die regenerierte wäßrige FeII-EDTA-Lösung von erhöhter Temperatur zur stufenförmigen Abkühlung aus dem Kathodenabteil abgezogen und über die Leitung (11) in den Wärmeaustauscher (5) und von dort über den Kühler (13) in den Absorber (2) zurückgeführt wird und der im Anodenabteil gebildete Sauerstoff abgezogen wird.

10. Vorrichtung nach Anspruch 9, dadurch gekennzeichnet, daß der Desorber (7) eine gefüllte Säule ist.

11. Vorrichtung nach einem der Ansprüche 9 bis 10, dadurch gekennzeichnet, daß der Wärmeaustauscher (5) ein Mantel und Rohr-Wärmeaustauscher ist, bei dem eine Temperaturdifferenz zwischen der heißen und der kühlen Seite 5 bis 15°C, vorzugsweise 10°C, eingestellt werden Kann.

12. Vorrichtung nach einem der Ansprüche 9 bis 11, dadurch gekennzeichnet, daß der Kühler (13) ein Wärmeaustauscher ist,, bei dem eine Temperaturdifferenz zwischen wärmerer und kühlerer Seite 4 bis 8°C, vorzugsweise 5°C, eingestellt werden Kann.

**Claims**

1. Process for preparing hydroxylamine from $NO_x$- and possibly $O_2$-containing flue gases by nitrogen removal from the flue gases combined with hydroxylamine synthesis by catalytic reduction of NO with hydrogen, characterized by the following steps:

    (a) a $NO_x$-containing flue gas is inserted into the bottom section of an absorber, where the $NO_x$ that is contained in the flue gas is absorbed at a comparatively low temperature in countercurrent contact with an aqueous FeII-EDTA solution which has been inserted into the head of the absorber, a FeII-(NO)-EDTA complex being thereby produced which is dissolved in the aqueous solution and which is, together with the aqueous solution that contains it, removed from the absorber as bottom product and inserted into a desorber as head product via a heat exchanger to increase its temperature, while the flue gas which has been freed of $NO_x$, is removed overhead from the absorber,

    (b) from the aqueous solution of the FeII(NO)-EDTA complex with increased temperature which was inserted into the head of the desorber, the NO is desorbed in countercurrent contact with the water vapor which was transferred from a reboiler to the bottom section of the desorber and with hydrogen which was transferred from an electrolyzer, the solution which is produced here and contains the dissolved FeII-EDTA complex being removed from the desorber as bottom product and being fed back into the upper section of the absorber via an electrolyzer for the reduction of possible contained FeIII-EDTA to FeII-EDTA and via a heat exchanger as well as a cooler for the step-by-step lowering of its temperature, and

    (c) the gaseous NO, $H_2$ and water vapor mixture that is removed overhead from the desorber is led to the direct catalytic hydroxylamine synthesis after the water vapor has been removed in a

9

condenser and the condensed water vapor has been returned to the reboiler.

2. Process according to claim 1, characterized by the fact that the absorption of $NO_x$ from the flue gas in the absorber is carried out at a temperature ranging from 25 to 35°C, preferably at 30°C, while the desorption of NO from the aqueous FeII(NO)-EDTA solution in the desorber is carried out at a temperature ranging from 80 to 100°C, preferably at 90°C.

3. Process according to claims 1 and 2, characterized by the fact that a desulfurized flue gas with a $NO_x$ content of 200 to 4,000, preferably of 500 ppm, and a $SO_2$ content of less than 100 mg $SO_2/m^3$ and a temperature of 50°C is introduced as flue gas into the absorber.

4. Process according to claims 1 to 3, characterized by the fact that a flue gas is used which contains a mixture of NO and $NO_2$ as well as possibly 3 to 5 percent by volume of $O_2$.

5. Process according to claims 1 to 4, characterized by the fact that in the desorber the aqueous FeII-(NO)-EDTA solution and gaseous hydrogen as well as water vapor are inserted in such quantities that the gaseous mixture which leaves the desorber contains about 35 percent by volume NO and 65 percent by volume $H_2$ after condensation and removal of the water vapor.

6. Process according to one of claims 1 to 5, characterized by the fact that a shell and tube heat exchanger is used as heat exchanger, in which the temperature difference between the hot and the cool side ranges from 5 to 15°C, preferably 10°C.

7. Process according to one of claims 1 to 6, characterized by the fact that a cooler is used as heat exchanger, in which the temperature difference between the warmer and the cooler side is between 4 and 8°C, preferably 5°C.

8. Process according to one of claims 1 to 7, characterized by the fact that the pH value of the aqueous solution in the absorber is kept constant at between 2.8 and 3.0.

9. Device to carry out the process according to one of claims 1 to 8, characterized by the fact that it contains:
   - an absorber (2) in the bottom section of which the $NO_x$- and possibly $O_2$-containing flue gas (1) is inserted and from which the flue gas (3), freed from $NO_x$, is removed overhead.
   - a heat exchanger (5) in the bottom section of which the FeII(NO)-EDTA complex-containing aqueous solution is inserted in order to increase its temperature to a value close to its boiling point, this solution being then removed overhead through a main (6) and inserted into a desorber (7), while the heated regenerated aqueous FeII-EDTA solution which was removed from an electrolyzer (9) via a main (11) and inserted into the head of the heat exchanger (5), is removed as bottom product after cooling down by heat exchange and fed back led through a main (12) via a cooler (13) through a main (14) into the head of the absorber (2);
   - a desorber (7) in the top section of which the heated aqueous FeII(NO)-EDTA complex solution is inserted through the main (6) and is freed by desorption from the complexly absorbed NO at an increased temperature in countercurrent contact with the hydrogen introduced through a main (10) into the bottom section of the desorber (7) and with water vapor introduced through a main (20), the NO, $H_2$ and water vapor mixture that is created in the absorber being then removed overhead through a main (15) and - after removal of the vapor in the condenser (16) and returning the condensed water vapor through a main (18) into a reboiler (19) in which the vapor is produced that is led into the desorber through the main (20) - is led directly through a main (17) to the catalytic hydroxylamine synthesis, while the aqueous FeII-EDTA solution which was removed from the desorber (7) as bottom product is led through a main (8) to the electrolyzer (9), and
   - an electrolyzer (9) which consists of an anode section and a cathode section receiving the aqueous FeII-EDTA solution which is removed from the desorber (7) through the main (8) into the cathode section to reduce the possible contained FeIII-EDTA to FeII-EDTA while at the same time building hydrogen which is inserted through the main (10) into the bottom section of the desorber (7), while the regenerated aqueous FeII-EDTA solution is removed with increased temperature at the cathode section in view of its step-by-step cooling and is led through the main (11) to the heat exchanger (5) and finally via the cooler (15) into the absorber (2), the oxygen that is produced in the anode section being removed.

**10.** Device according to claim 9, characterized by the fact that the desorber (7) is a filled column.

**11.** Device according to one of claims 9 to 10, characterized by the fact that the heat exchanger (5) is a shell and tube heat exchanger, in which the temperature difference between the hot and the cool side can be adjusted between 5 and 15 ° C, preferably at 10 ° C.

**12.** Device according to one of claims 9 to 11, characterized by the fact that the cooler (13) is a heat exchanger, in which a temperature difference between the warmer and the cooler side can be adjusted between 4 and 8 ° C, preferably at 5 ° C.

## Revendications

**1.** Procédé pour la préparation d'hydroxylamine à partir de gaz d'échappement contenant des $NO_x$ et éventuellement $O_2$ en combinant la dénitrification des gaz d'échappement contenant $NO_x$ et éventuellement $O_2$ avec la synthèse d'hydroxylamine par réduction catalytique de NO par de l'hydrogène, procédé qui est caractérisé par le fait qu'il comprend les étapes suivantes:

(a) les gaz d'échappement contenant du $NO_x$ sont introduits dans la portion inférieure d'un absorbeur, dans lequel le $NO_x$ contenu dans les gaz est absorbé en contact à contre-courant avec une solution aqueuse de FeII-EDTA introduite en tête de l'absorbeur à température relativement basse, en créant un complexe FeII(NO)-EDTA dissous dans la solution aqueuse, qui est retiré de l'absorbeur avec la solution aqueuse le contenant en tant que produit de queue et introduit par l'intermédiaire d'un échangeur de chaleur pour l'élévation de sa température en tant que produit de tête dans un désorbeur, alors que les gaz d'échappement libérés des $NO_x$ sont retirés en tête de l'absorbeur,

(b) le NO est désorbé de la solution aqueuse du complexe de FeII(NO)-EDTA à température élevée introduite dans la tête du désorbeur, en contact à contre-courant d'une part de vapeur d'eau venant d'un bouilleur et introduite dans la portion inférieure du désorbeur et d'autre part d'hydrogène provenant d'un électrolyseur, et la solution aqueuse ainsi obtenue, qui contient le complexe FeII-EDTA en solution, est retirée du désorbeur en tant que produit de queue et recyclée vers la portion supérieure de l'absorbeur par l'intermédiaire d'un électrolyseur pour la réduction de FeIII-EDTA en FeII-EDTA, et par l'intermédiaire d'un échangeur de chaleur ainsi qu'un refroidisseur pour abaisser sa température par étapes, et

(c) le mélange gazeux contenant NO, $H_2$ et vapeur d'eau retiré en tête du désorbeur est amené à la synthèse catalytique directe d'hydroxylamine après élimination de la vapeur d'eau dans un condenseur et acheminement de la vapeur condensée vers le bouilleur.

**2.** Procédé selon la revendication 1, caractérisé par le fait que l'absorption des $NO_x$ à partir du gaz d'échappement dans l'absorbeur est effectuée à une température entre 25 et 35 ° C, de préférence à 30 ° C, alors que la désorption du NO contenu dans la solution aqueuse de FeII(NO)-EDTA dans le désorbeur est effectuée à une température entre 80 et 100 ° C, de préférence à 90 ° C.

**3.** Procédé selon la revendication 1 ou 2, caractérisé par le fait qu'on introduit dans l'absorbeur en tant que gaz d'échappement un gaz désulfuré à une température de 50 ° C ayant une teneur en $NO_x$ de 200 à 4000 ppm, de préférence de 500 ppm, et une teneur en $SO_2$ de moins de 100 mg/m$^3$.

**4.** Procédé selon les revendications 1 à 3, caractérisé par le fait qu'on utilise un gaz d'échappement qui contient NO en mélange avec $NO_2$ ainsi qu'éventuellement 3 à 5% en volume de $O_2$.

**5.** Procédé selon les revendications 1 à 4, caractérisé par le fait qu'on introduit dans le désorbeur la solution aqueuse de FeII(NO)-EDTA et de l'hydrogène sous forme gazeuse ainsi que de la vapeur d'eau dans des quantités telles que le mélange gazeux quittant le désorbeur après la condensation et l'élimination de la vapeur d'eau contienne environ 35% en volume de NO et 65% en volume de $H_2$.

**6.** Procédé selon l'une des revendications 1 à 5, caractérisé par le fait qu'en tant qu'échangeur de chaleur on utilise un échangeur de chaleur à faisceau tubulaire, dans lequel la différence de température entre le côté chaud et le côté froid est entre 5 et 15 ° C, et s'élève de préférence à 10 ° C.

**7.** Procédé selon l'une des revendications 1 à 6, caractérisé par le fait qu'en tant que refroidisseur on utilise un échangeur de chaleur dans lequel la différence de température entre côté chaud et côté froid est entre 4 et 8°C, et s'élève de préférence à 5°C.

**8.** Procédé selon l'une des revendications 1 à 7, caractérisé par le fait que le pH de la solution aqueuse dans l'absorbeur est maintenu constant entre 2,8 et 3,0.

**9.** Dispositif pour la mise en oeuvre du procédé selon l'une des revendications 1 à 8, caractérisé par le fait qu'il comprend

- un absorbeur (2), dont la portion inférieure reçoit un gaz d'échappement (1) contenant $NO_x$ ainsi qu'éventuellement $O_2$ et qui restitue en tête le gaz d'échappement (3) exempt de $NO_x$;
- un échangeur de chaleur (5), dont la portion inférieure reçoit la solution aqueuse contenant le complexe FeII(NO)-EDTA pour augmenter sa température jusqu'à une valeur proche de son point d'ébullition, cette solution étant alors évacuée par un conduit (11) en tête et étant introduite dans un désorbeur (7), tandis que la solution aqueuse de FeII-EDTA chauffée, régénérée, qui est extraite par un conduit (11) d'un électrolyseur (9), est introduite en tête de l'échangeur de chaleur (5) et évacuée après le refroidissement en tant que produit de queue et ramenée par un conduit (12) en tête de l'absorbeur (2) par l'intermédiaire d'un refroidisseur (13) et d'un conduit (14);
- un désorbeur (7), dont la portion supérieure reçoit par le conduit (6) la solution chauffée aqueuse du complexe FeII(NO)-EDTA, cette solution étant libérée du NO qui est complexé, en contact à contre-courant avec de l'hydrogène fourni par un conduit (10) et de la vapeur d'eau introduite par un conduit (20) dans la portion inférieure du désorbeur (7), par désorption à température élevée, puis le mélange gazeux de NO, $H_2$ et vapeur d'eau produit dans l'absorbeur est éliminé par un conduit (15) en tête et - après élimination de la vapeur d'eau dans un condenseur (16) et acheminement de la vapeur d'eau condensée par un conduit (18) vers un bouilleur (19), dans lequel se forme la vapeur d'eau introduite par un conduit (20) dans le désorbeur - est amené par un conduit (17) directement à la synthèse catalytique d'hydroxylamine, alors que la solution aqueuse de FeII-EDTA extraite du désorbeur (7) en tant que produit de queue est amené par un conduit (8) vers un électrolyseur (9), et
- un électrolyseur (9) constitué d'un compartiment anodique et d'un compartiment cathodique, dont le compartiment cathodique reçoit la solution aqueuse de FeII-EDTA extraite par le conduit (8) du désorbeur pour la réduction d'un FeIII-EDTA éventuellement présent en FeII-EDTA avec formation simultanée d'hydrogène, qui est introduit par le conduit (10) dans la portion inférieure du désorbeur (7), alors que la solution aqueuse de FeII-EDTA régénérée à température élevée est extraite du compartiment cathodique pour son refroidissement par étapes et amenée par le conduit (11) à l'échangeur de chaleur (5) et de là par l'intermédiaire du refroidisseur (13) à l'absorbeur (2), tandis que l'oxygène formé dans le compartiment anodique est évacué.

**10.** Dispositif selon la revendication 9, caractérisé par le fait que le désorbeur (7) est une colonne à garnissage.

**11.** Dispositif selon l'une des revendications 9 à 10, caractérisé par le fait l'échangeur de chaleur (5) est un échangeur de chaleur à faisceau tubulaire, dans lequel une différence de température entre le côté chaud et le côté froid peut être ajustée entre 5 et 15°C, de préférence à 10°C.

**12.** Dispositif selon l'une des revendications 9 à 11, caractérisé par le fait que le refroidisseur (13) est un échangeur de chaleur, dans lequel on peut ajuster une différence de température entre côté chaud et côté froid entre 4 et 8°C, de préférence à 5°C.

Fig.1

Fig.2